# EUROPÄISCHE PATENTSCHRIFT

(11) **EP 1 714 057 B1**
(45) Veröffentlichungstag und Bekanntmachung des Hinweises auf die Patenterteilung: **27.07.2011**
(21) Anmeldenummer: 05701300.5
(22) Anmeldetag: 02.02.2005
(51) Int. Cl.: F16H 63/20

(54) **EINSTANGENSCHALTVORRICHTUNG AN EINEM SCHALTGETRIEBE**
SHIFTING DEVICE WITH A SINGLE ROD ON A GEARBOX
DISPOSITIF DE COMMUTATION A UNE SEULE TRINGLE SUR UNE BOITE DE VITESSES

(30) Priorität: 11.02.2004 DE 102004006682
(43) Veröffentlichungstag der Anmeldung: 25.10.2006
(73) Patentinhaber: ZF FRIEDRICHSHAFEN Aktiengesellschaft, 88038 Friedrichshafen (DE)
(72) Erfinder: DRABEK, Michael, 14776 Brandenburg (DE); KÖNIG, Jan-Peter, 14550 Gross-Kreutz (DE)
(86) Internationale Anmeldenummer: PCT/EP2005/001007
(87) Internationale Veröffentlichungsnummer: WO 2005/078320

(56) Entgegenhaltungen:
- WO-A-01/31233
- DE-A1- 10 231 547
- DE-A1- 10 253 471

## Beschreibung

Die Erfindung betrifft eine Schaltvorrichtung an einem mehrgängigen Schaltgetriebe gemäß dem Oberbegriff des Patentanspruchs 1, und bekannt aus WO 01/31233.

Aus der DE 39 34 733 A1 ist dem Fachmann eine Fernschalteinrichtung für ein mehrstufiges Schaltgetriebe bekannt, bei der ein Handschalthebel über eine Schaltstange mit einer Getriebeschaltwelle verbunden ist. Diese Wirkverbindung ist derart gewählt, dass eine Wählbewegung des Handschalthebels zu einer Axialverschiebung der Schaltwelle führt und eine Schaltbewegung eine Drehung der Schaltwelle um ihre Längsachse erzeugt.

An dieser Schaltwelle ist ein Schaltfinger ausgebildet, der alternativ in die Ausnehmung von Schaltschienen greifen und diese axial verschieben kann. Diese Schaltschienen stehen ihrerseits mit Synchronisation- und Koppelmittel an Radsatzwellen des Schaltgetriebes derart in Wirkverbindung, dass zur Durchführung von konkreten Übersetzungsänderungsvorgängen Getriebelosräder abgebremst und drehfest mit der sie tragenden Getriebewelle verbunden werden können.

Bei einer solchen Kombination von Schaltgetriebe und Getriebeschaltvorrichtung ist es zur Erzielung einer kurzen Getriebebaulänge und niedrigen Herstellkosten sinnvoll, jeweils ein Synchronisation- und Koppelmittel zwischen zwei Loszahnrädern anzuordnen, die zu zwei in einer Schaltgasse einer H-Schaltvorrichtung angeordneten Gängen gehören.

Der Getriebekonstruktion sowie der Auslegung der Gangschaltvorrichtung sind in dieser Hinsicht daher enge Beschränkungen auferlegt. Insbesondere bei einem Getriebe mit zwei nebeneinander auf einer Radsatzwelle gelagerten Losrädern, die nicht zu zwei in einer Schaltgasse einer H-Schaltvorrichtung angeordneten Gängen gehören, ist eine mechanische Konvertierungsvorrichtung notwendig, die beispielsweise bei einer Schaltbewegung des Getriebeschalthebels vom ersten in den zweiten Gang eine Auslegebewegung des Synchronisation- und Koppelmittels für den ersten Gang sowie eine Einlegebewegung eines anderen Synchronisation- und Koppelmittels für den zweiten Gang erzeugt.

Vor diesem Hintergrund ist aus der DE 102 31 547 A1 eine Schaltvorrichtung für ein Schaltgetriebe bekannt, bei dem mindestens eines seiner Schaltpakete zwei nicht aufeinander folgenden Übersetzungsstufen des Getriebes zugeordnet ist. Diese Schaltvorrichtung ist zudem mit einer mechanischen Konvertierungsvorrichtung ausgestattet, mittels der eine Handschaltvorrichtung mit einer H-Schaltkulisse ein solches Getriebe schalten kann.

Bei dieser Schaltvorrichtung ist der Getriebeschalthebel in der H-Schaltkulisse geführt und mit zwei Getriebeschaltwellen gekoppelt, so dass eine Bewegung des Schalthebels in einer Schaltgasse zu einer Verschwenkung der ersten Schaltwelle um deren Längsachse führt. Darüber hinaus ist auf der ersten Schaltwelle ein erstes Zahnrad befestigt, das mit einem zweiten Zahnrad auf der zweiten Schaltwelle kämmt. Bei einer Drehung der ersten Schaltwelle dreht sich die zweite Schaltwelle daher gegenläufig in die andere Richtung. Zur Anwahl einer Schaltgasse durch den Getriebeschalthebel werden die beiden Schaltwellen zwangsgekoppelt parallel zu ihren Längsachsen verschoben.

Außerdem verfügen diese beiden Schaltwellen über Schaltfinger, die in Abhängigkeit von dem eingelegten Getriebegang in gangindividuelle Vertiefungen von Schaltstangen greifen, weiche mit Schaltgabeln verbunden sind. Diese Schaltgabeln stehen ihrerseits mit den Schiebemuffen der Schaltpakete in Verbindung, die bei einer Schaltbetätigung zur drehfesten Verbindung von Losrädern mit einer Getriebewelle axial auf der jeweiligen Getriebewelle verschoben werden.

Darüber hinaus beschreibt die nicht vorveröffentlichte DE 102 53 471 A1 eine Einstangenschaltung für beliebig setzbare Gangpositionen eines Schaltgetriebes, bei der ein fahrerseitiger Schalt- und Wählhebel mit einer axial verschiebbaren und um ihre Längsachse verschwenkbaren Schaltfingerwelle gekoppelt ist. Diese Schaltfingerwelle verfügt für jeden Getriebegang über Schaltfinger zum Einlegen und Auslegen von Getriebegängen, die in Aussparungen von jeweils zwei Getriebegängen zugeordneten Schaltrahmen eingreifen.

Zur Anwahl eines Getriebeganges wird die Schaltfingerwelle axial verschoben und zum Einlegen eines Ganges um ihre Längsachse verdreht, so dass gangbezogen jeweils ein Schaltfinger in eine Aussparung des angewählten Schaltrahmens eingreift und diesen im wesentlichen senkrecht zur Längsachse der Schaltfingerwelle verschiebt. Mit den Schaltrahmen verbundene Schaltstangen wirken jeweils auf Schaltgabeln ein, mit denen Schiebemuffen zum drehfesten Verbinden von Getriebeloszahnrädern mit deren Radsatzwelle auf dieser axial verschiebbar sind.

Zudem sind an den Schaltrahmen radial zur Schaltfingerwelle weisende Sperrnocken ausgebildet, die ein unzulässiges Einfahren von Schaltfingern in den jeweiligen Schaltrahmen verhindern können.

Wenngleich diese Schaltvorrichtungen mit dem Vorteil verbunden sind, dass beispielsweise die Getriebestruktur eines Doppelkupplungsgetriebes mit der beschriebenen Gang- und Schaltpaketanordnung unter Beibehaltung fast alter seiner Komponenten auch als Handschaltgetriebe nutzbar sowie mit einer H-Schaltkulisse schaltbar ist, so ist der Aufbau dieser Schaltvorrichtungen jedoch mechanisch vergleichsweise aufwendig.

Vor diesem Hintergrund ist daher die Aufgabe an die Erfindung, eine Schaltvorrichtung für Schaltgetriebe vorzustellen, die einen mechanisch einfacheren Aufbau aufweist, deren Betätigung leichter automatisierbar ist, und die sowohl für Doppelkupplungsgetriebe als auch für Schaltgetriebe mit nur einer Anfahr- und Schaltkupplung nutzbar ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich der Aufbau einer solchen Getriebeschaltvorrichtung vereinfachen lässt, wenn trotz nicht schaltgassenbezogener Anordnung der Gangzahnräder auf den Radsatzwellen des Getriebes alle Gänge mit nur einer Schaltwelle sowie ohne zugeordnete Schaltrahmen erreichbar und schaltbar sind.

Demnach betrifft die Erfindung eine Schaltvorrichtung an einem mehrgängigen Schaltgetriebe, mit einer axial verschiebbar und drehbar gelagerten Schaltwelle, mit an der Schaltwelle ausgebildeten Schaltfingern, mit Schaltschwingen, die jeweils mit einer Synchronisations- und Koppelvorrichtung (Schaltpaket) wirkverbunden sind, und mit an den Schaltschwingen jeweils ausgebildeten Mitnehmern, in die die Schaltfinger zur Durchführung eines Übersetzungsänderungsvorgangs eingreifen und über diese die Schaltschwingen axial verschieben kann.

Zur Lösung der gestellten Aufgabe ist in Kombination mit den genannten Merkmalen vorgesehen, dass jeder der Schaltschwingen mindestens ein Schaltfinger zugeordnet ist, dass der oder die Mitnehmer einer jeden Schaltschwinge ein im wesentlichen U-förmiges Querschnittsprofil mit einem kurzen Schenkel und einen langen Schenkel aufweist, wobei die Länge des kurzen Schenkels so gewählt ist, dass einerseits in einer Nichtauslenkposition der zugeordnete Schaltfinger seitlich über den kurzen Schenkel hinweg bis zur Anlage an den langen Schenkel sowie zur Auslenkung der Schaltschwinge verschoben werden kann, und andererseits zur Rückführung der Schaltschwinge in die Nichtauslenkposition N gegen den kurzen Schenkel anlegbar ist.

In einer bevorzugten Ausbildung der Schaltvorrichtung ist zudem vorgesehen, dass die Mitnehmer nichtzentrisch mit einem Verbindungsabschnitt der jeweiligen Schaltschwinge verbunden sind. Durch diese Maßnahme wird erreicht, dass der einer Schaltschwinge zugeordnete Schaltfinger beim Einfahren in den Mitnehmer kollisionsfrei über den kurzen Mitnehmerschenkel bewegt und dieser zum Rückstellen der Schaltschwinge in die Neutralposition genutzt wird.

Gemäß einer anderen Weiterbildung der Erfindung sind die Schaltschwingen jeweils in einem Schwenklager schwenkbar gelagert und weisen an ihrem vom Mitnehmer wegweisenden Ende ein Eingriffselement auf, welches mit der zugeordneten Synchronisations- und Koppelvorrichtung des Schaltgetriebes wirkverbunden ist.

Darüber hinaus kann die Schaltvorrichtung mit schwenkbar gelagerten Umlenkhebeln ausgestattet sein, die an ihrem einen Ende ebenfalls über einen Mitnehmer verfügen, in den ein Schaltfinger der Schaltwelle eingreifen kann. An ihrem gegenüberliegenden Ende ist ein Eingriffselement ausgebildet, welches in den Eingriffsbereich eines Mitnehmers einer Schaltschwinge ragt. Durch dieses Zusammenwirken der externen Schalt- und Wählbetätigung (Schaltwelle mit Schaltfinger) mit einem Umlenkhebel und einer Schaltschwinge ist eine Umkehr der Schwenkbewegung der Schaltschwinge im Vergleich zu derjenigen bei einer direkten Kopplung von Schaltwelle/Schaltfinger und Schaltschwinge erreichbar.

Zudem erscheint es sinnvoll, wenn die Schaltfinger an axial unterschiedlichen Positionen angeordnet und mit unterschiedlicher Länge an der Schaltwelle ausgebildet sind.

Außerdem kann es für den konstruktiven Aufbau der Schaltvorrichtung in diesem Zusammenhang vorteilhaft sein, wenn die Mitnehmer der Schaltschwingen unterschiedliche seitliche Abstände zu der Schaltwelle aufweisen.

Hinsichtlich der Ausbildung der kurzen und langen Schenkel der Mitnehmer der Schaltschwingen und/oder der Umlenkhebel ist es von besonderer Bedeutung, dass diese derart in der Schaltvorrichtung positioniert sind, dass beim Einlegen eines Gangs G1 der zugeordnete Schaltfinger den kurzen Schenkel des Mitnehmers kollisionslos in Richtung zu dem langen Schenkel überfahren kann, während der Schaltfinger des in der gleichen Schaltgasse befindlichen anderen Gangs G2 sich von dem langen Schenkel des diesem Gang G2 zugeordneten Mitnehmers wegbewegt und den kurzen Schenkel kollisionslos überstreicht.

Die vorgenannte Schaltvorrichtung kann an sich für jedes mehrgängige Schaltgetriebe genutzt werden. Ein solches Schaltgetriebe kann beispielsweise ein Fünfgang- oder Sechsgangschaltgetriebe sein, dessen axiale Radsatzanordnung ausgehend von einem Anfahrelement wie folgt ist: Rückwärtsgang RG und zweiter Gang G2, vierter Gang G4 und sechster Gang G6, dritter Gang G3 und erster Gang G1, fünfter Gang G5 und im Falle des Siebenganggetriebes siebter Gang G7.

Dieses Getriebe kann dabei als Doppelkupplungsgetriebe oder manuelles, beziehungsweise automatisiert schaltbares Schaltgetriebe mit nur einer Anfahr- und Schaltkupplung aufgebaut sein, welches über eine oder zwei Vorgelegewellen und mindestens eine Getriebeeingangswelle verfügt.

Von besonderem Vorteil bei dieser Schaltvorrichtung ist, dass diese von einer äußeren Schaltvorrichtung mit einer H-Schaltkulisse betätigbar ist. Dabei können die Synchronisations- und Koppelmittel beliebig in bezug auf die Losräder des Getriebes angeordnet sein, so dass beispielsweise ein auf einer Radsatzwelle angeordnetes Synchronisations- und Koppelmittel zwei in einer Schaltkulisse mit H-Schaltbild nicht in einer Schaltgasse angeordnete Gänge schaltet (zum Beispiel Rückwärtsgang RG und zweiter Gang G2).

Zur Verdeutlichung der Erfindung sowie zur Darstellung einiger ihre Ausgestaltungsformen ist der Beschreibung eine Zeichnung beigefügt.
In dieser zeigen:
- Fig. 1: eine erfindungsgemäß ausgebildete Schaltwelle,
- Fig. 2: eine schematische Seitenansicht einer Schaltschwinge,
- Fig. 3: eine schematische Darstellung des Eingriffs von Schaltfin- gern in Mitnehmer von Schaltschwingen sowie
- Fig. 4: eine schematisierte Darstellung des Zusammenwirkens von verschiedenen Bauteilen der Schaltvorrichtung.

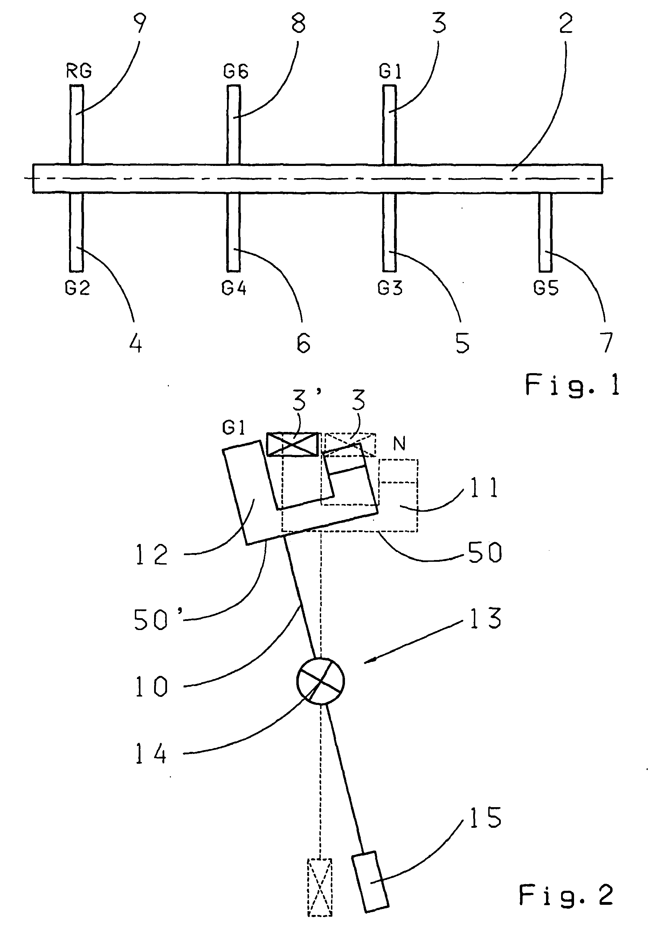

Demnach zeigt Fig. 1, dass die axial verschiebbar und um ihre Längsachse drehbar gelagerte Schaltwelle 2 für jeden der fünf Vorwärtsgänge G1 bis G5 und den Rückwärtsgang RG über jeweils einen individuellen Schaltfinger 3 bis 9 verfügt. Diese Schaltfinger wirken auf jeweils zugeordnete Schaltschwingen derart ein, dass mit diesen Synchronisations- und Koppelmittel auf einer Radsatzwelle des Getriebes axial verschoben werden können. Solche Synchronisations- und Koppelmittel sind beispielsweise Synchronringe und Schiebemuffen, mit deren Hilfe während eines Schaltvorgangs Getriebelosräder auf die Drehzahl der sie tragenden Radsatzwelle abgebremst und mit dieser drehfest verbunden werden.

Fig. 2 zeigt den Aufbau einer solchen Schaltschwinge 13 in einer schematisierten Seitenansicht in zwei Positionen, wobei diese diejenige Schaltschwinge ist, die in den anderen Figuren zur Betätigung des ersten Getriebegangs G1 genutzt wird. Die gepunktet dargestellte Position entspricht einer Nichtauslenkposition, während die mit durchgezogenen Strichen gezeichnete Schaltschwinge in einer Auslenkposition gezeigt ist.

Wie Fig. 2 deutlich entnehmbar ist, verfügt eine solche Schaltschwinge 13 über einen Verbindungsabschnitt 10, an dessen einem Ende ein Mitnehmer 50 und an dessen anderem Ende ein Eingriffselement 15 ausgebildet ist. Während das Eingriffselement 15 in Wirkverbindung mit dem vorgenannten Synchronisations- und Koppelmittel steht, greift in den Mitnehmer 50 derjenige Schaltfinger 3 ein, der dieser Schaltschwinge 13 zugeordnet ist. Außerdem sei darauf hingewiesen, dass die Schaltschwinge 13 in einem Schwenklager 14 schwenkbar gelagert ist, so dass eine Auslenkung des Mitnehmers beispielsweise nach links eine Auslenkung des Eingriffselementes 15 nach rechts bewirkt.

Von besonderer Bedeutung für die Funktionsweise der erfindungsgemäß ausgebildeten Schaltvorrichtung ist zunächst, dass der Mitnehmer 50 nicht zentrisch mit dem Verbindungsabschnitt 10 der Schaltschwinge 13 verbunden ist. Zudem ist der Mitnehmer 50 so ausgebildet, dass dieser ein im wesentlichen U-förmiges Querschnittsprofil aufweist, welches einen kurzen Schenkel 11 und einen langen Schenkel 12 aufweist.

Wenn nun mit dem Schaltfinger 3 die Schaltschwinge 13 zum Einlegen des ersten Getriebeganges G1 von der gepunktet dargestellten Neutralstellung in die ausgelenkte Stellung mit den durchgezogen gezeichneten Bauteilkonturen verschwenkt werden soll, so wird der Schaltfinger 3 von rechts kommend durch eine Axialbewegung der Schaltwelle 2 zunächst über den kurzen Schenkel 11 geführt und gegen den langen Schenkel 12 gedrückt (Schaltfingerposition 3'). Dadurch schwenkt der Mitnehmer 50 der Schaltschwinge 13 um das Schwenklager 14 nach links in die Mitnehmerposition 50', während das Eingriffselement 15 nach rechts verschwenkt wird.

Nach der Auslenkung der Schaltschwinge 13 durch den Schaltfinger 3, 3' kann diese in die gepunktet gezeichnete Neutralstellung N dadurch zurückgeführt werden, dass der Schaltfinger 3 durch eine Axialverschiebung der Schaltwelle 2 aus seiner Position 3' nach rechts verschoben wird. Dabei stößt dieser gegen den oberen Abschnitt des kurzen Mitnehmerschenkels 11, der aufgrund der außermittigen Anordnung des Mitnehmers 50 an dem Verbindungsabschnitt 10 der Schaltschwinge 13 soweit dem Schaltfinger 3, 3' entgegenragt, dass dieser einen Angriffspunkt zum Zurückschwenken der Schaltschwinge 13 findet.

Dieser Rückführungsvorgang in die Neutralposition N funktioniert solange, bis der kurze Mitnehmerschenkel 11 den mechanischen Kontakt zu dem Schaltfinger 3 verliert. Anschließend verbleibt der Schaltfinger 3 zwischen dem kurzen Schenkel 11 und dem langen Schenkel 12, oder er wird durch eine weitere axiale Schaltwellenverlagerung über den kurzen Mitnehmerschenkel 11 hinweggeführt.

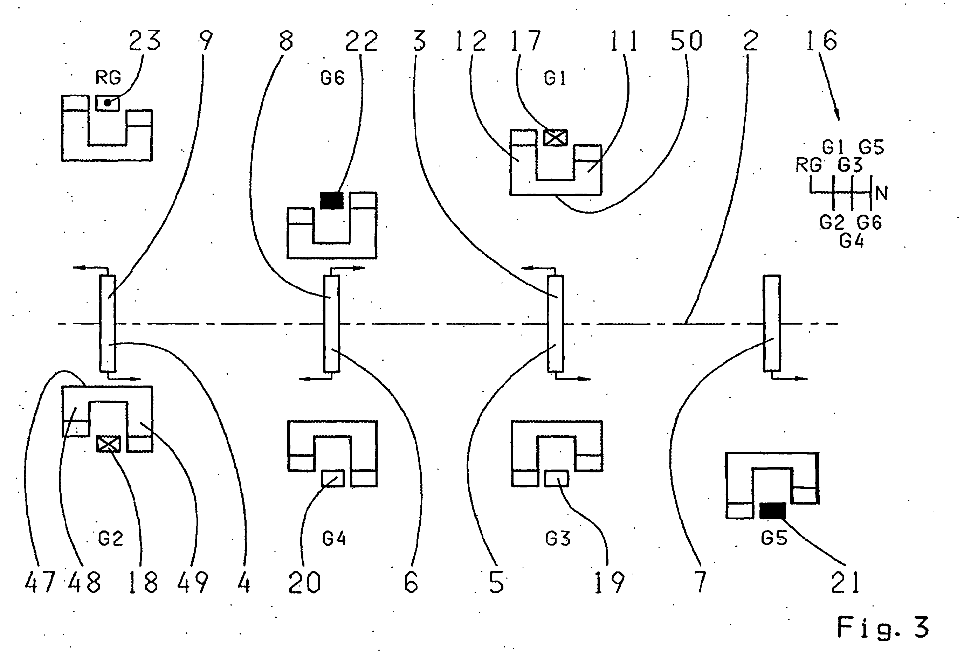

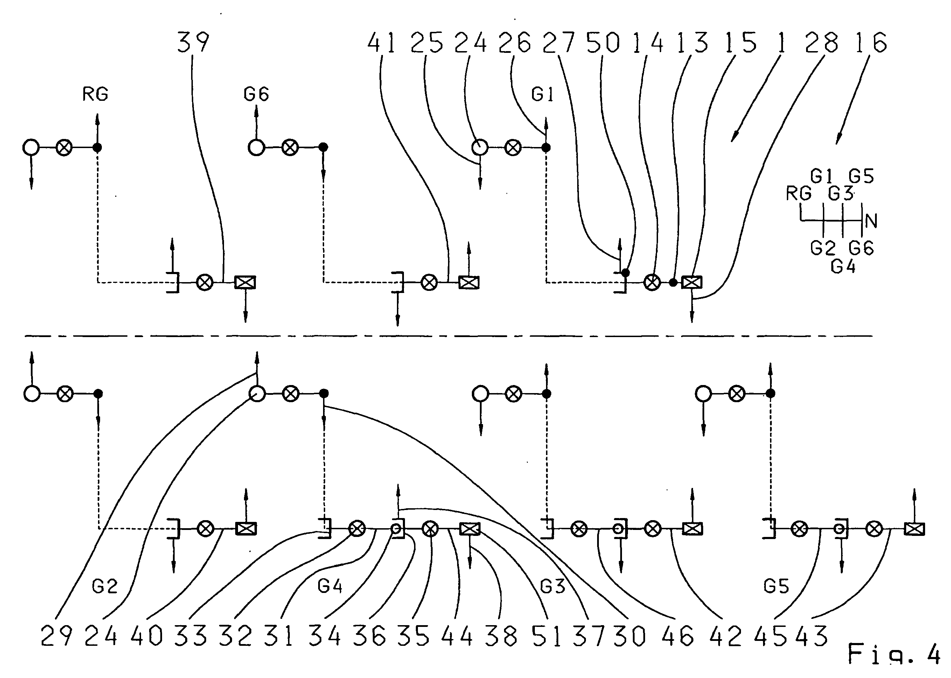

Ein Verschwenken der Schaltschwinge 13 in die andere Richtung, also so, dass der Mitnehmer 50 aus der Neutralstellung N nach rechts verlagert würde, ist nicht möglich und auch nicht erwünscht, da das mit dem Eingriffselement 15 zusammenwirkende und hier nicht dargestellte Synchronisations- und Koppelmittel in diese Gegenrichtung keinen Gang einlegen kann, der in der gleichen Schaltgasse einer H-Schaltvorrichtung liegt wie der erste Gang G1. Der hier in Rede stehende zweite Getriebegang G2 wird dagegen von einem anderen Schaltfinger und einer anderen Schaltschwinge betätigt, worauf im Zusammenhang mit Fig. 3 und Fig. 4 eingegangen wird.

So zeigt Fig. 3 eine schematische Darstellung des Eingriffs von Schaltfingern in Mitnehmer von Schaltschwingen der erfindungsgemäßen Schaltvorrichtung, bei der an einer symbolisierten Schaltwelle 2 die bereits genannten gangindividuellen Schaltfinger 3, 4, 5, 6, 7, 8, 9 angeordnet sind. Wie die oben und unten an den Schaltfingern ansetzenden Richtungspfeile andeuten, kann die Schaltwelle 2 mit ihren Schaltfinger 3, 4, 5, 6, 7, 8, 9 zum Einlegen der Getriebegänge RG, G1, G2, G3, G4, G5 und G6 axial verschoben werden, wobei die Richtungspfeile die Bewegungsrichtung des jeweiligen Mitnehmers bedeuten.

Fig. 3 zeigt zudem, dass das an sich bekannte H-Schaltbild 16 nicht mit der Anordnung der Getriebegänge auf den Radsatzwellen des Getriebes übereinstimmt. So würde eine einfache Übertragung der Schalthebelbewegung in der Schaltkulisse des ersten Gangs G1 und des zweiten Gangs G2 dazu führen, dass ausgehend vom ersten Gang G1 ohne weitere Maßnahmen der dritte Gang G3 eingelegt würde.

Um nun auch mit einer solchen H-Schaltkulisse 16 ein Getriebe mit der getriebeinternen Ganganordnung wie in Fig. 3 schalten zu können, sieht die Erfindung vor, dass die Position der Schaltfinger 3, 4, 5, 6, 7, 8, 9 zueinander sowie in bezug auf die Mitnehmer der gangindividuellen Schaltschwingen so aufeinander abgestimmt sind, dass eine Einlegebewegung eines Schaltfingers zu einer entgegengesetzten Bewegung des Schaltfingers für den anderen Gang in der gleichen Schaltgasse führt. Dieses lässt sich gut anhand von Fig. 3 bei einem Wechsel vom ersten Gang G1 und den zweiten Gang G2 erläutern.

Sofern nun also der Mitnehmer 50 der Schaltschwinge für den ersten Gang G1 aus der Neutralposition 17 des Schaltfingers 3 nach links zum Einlegen des ersten Gangs G1 verschwenkt werden soll, so wird gleichzeitig auch der Schaltfinger 4 für den zweiten Gang G2 ausgehend von einer Neutralposition 18 nach links über den kurzen Schenkel 48 des Mitnehmers 47 an der Schaltschwinge für den zweiten Gang G2 geführt.

Zum Auslegen des ersten Gangs G1 wird der Schaltfinger 3 durch eine entgegengesetzte axiale Verschiebung der Schaltwelle 2 nach rechts gelenkt, so dass dieser in Eingriff mit dem nun mit der linken oberen Ecke des kurzen Mitnehmerschenkels 11 gerät und diesen nach rechts bis in die Neutralposition 17 des Schaltfingers 3 verschiebt. Gleichzeitig wird auch der Schaltfinger 4 nach rechts über den kurzen Schenkel 48 des Mitnehmers 47 der Schaltschwinge für den zweiten Gang G2 in seine Neutralposition 18 gelenkt.

Sofern nun der zweite Gang G2 durch Verschwenken des Getriebeschalthebels in der Schaltgasse G1-G2 der Handschaltvorrichtung 16 eingelegt werden soll, führt die geschilderte Bewegung des Handschalthebels zu einer weiteren Axialverschiebung der Schaltwelle 2, in deren Folge der Schaltfinger 4 gegen den langen Schenkel 49 des Mitnehmers 47 der Schaltschwinge für den zweiten Gang G2 stößt und diesen in Fig. 3 nach rechts verschwenkt.

Damit einher geht eine Verschiebung des Schaltfingers 3 nach rechts, so dass sich dieser von seiner Neutralposition 17 weg über den kurzen Schenkel 11 des Mitnehmers 50 der Schaltschwinge für den ersten Gang G1 schiebt.

Wie Fig. 3 zeigt, erfolgt das Einlegen der anderen Getriebegänge sowie das Rückführen der Schaltschwingen in die Neutralpositionen 19, 20, 21, 22, 23 der anderen Gänge prinzipiell in gleicher Weise. Allerdings wird für das Betätigen der Schaltschwingen des dritten Ganges G3, des vierten Ganges G4 und des fünften Ganges G5 jeweils eine Schwenkrichtungsumkehr benötigt, wofür in einer Ausgestaltung der Erfindung gesonderte Umlenkhebel vorgesehen sind.

Hierzu zeigt Fig. 4 eine schematisierte Darstellung des Zusammenwirkens von verschiedenen Bauteilen der erfindungsgemäßen Schaltvorrichtung 1. Wie schon zu Fig. 2 und Fig. 3 erläutert, ist beispielsweise zum Einlegen des ersten Getriebegangs G1 eine Schaltschwinge 13 vorgesehen, deren Eingriffselement 15 mit einer nicht dargestellten Synchronisations- und Koppelvorrichtung wirkverbunden ist. In den Mitnehmer 50 der Schaltschwinge 13 greift der Schaltfinger 3 der hier nicht gezeigten Schaltwelle 2, welche in Wirkverbindung mit dem Getriebeschalthebel 24 an der H-Schaltvorrichtung 16 steht. Durch diesen Aufbau wird eine Schalthebelbewegung in einer Schaltgasse gemäß dem Richtungspfeil 25 zunächst in eine Bewegung 27 des Mitnehmers 50 umgewandelt, während sich das Eingriffselement 15 und beispielsweise eine Schiebemuffe auf einer Radsatzwelle des Getriebes zum Einlegen des ersten Gangs G1 in Richtung des Pfeils 28 bewegt.

Ein vergleichbarer Aufbau und eine vergleichbare Wirkungsweise ergibt sich auch für den Rückwärtsgang RG, den zweiten Gang G2 und den sechsten Gang G6 mit ihren Schaltschwingen 39, 40, 41.

Um nun mit nur einer Schaltwelle 2 alle Getriebegänge unabhängig von der Anordnung der Gangzahnräder auf den Radsatzwellen des Getriebes erreichen und schalten zu können, ist für den dritten Gang G3, den vierten Gang G4 und den fünften Gang G5 jeweils ein Umlenkhebel 31, 45, 46 vorgesehen, der als mechanisches Bindeglied zwischen den jeweiligen Schaltfingern der Schaltwelle 2 und den Mitnehmern der gangspezifischen Schaltschwingen 42, 43, 44 dient.

Wie Fig. 4 exemplarisch zum Einlegen des vierten Getriebegangs G4 zeigt, steht die hier nicht dargestellte Schaltwelle 2 mit dem Schalthebel 24 der getriebeexternen Schaltbetätigungsvorrichtung 16 in Wirkverbindung, so dass eine Einlegebewegung 29 des Schalthebels 24 zu einer Bewegung 30 der Schaltwelle 2 und des damit verbundenen Schaltfingers 6 für den vierten Gang G4 führt. Da der nicht gezeigte Schaltfinger 6 in den Mitnehmer 33 des Umlenkhebels 31 greift, führt dies hinsichtlich eines Eingriffselements 34 am Umlenkhebel 31 zu einer Schwenkbewegung 37 um dessen Schwenkachse 32.

Weil das Eingriffselement 34 des Umlenkhebels 31 in den Mitnehmer 36 der Schaltschwinge 44 für den vierten Gang G4 eingreift, wird auch dieser in Richtung 37 verschwenkt. Da diese Schaltschwinge 44 um deren Schwenkachse 35 schwenkbar gelagert ist, wirkt sich dies auch auf das Eingriffselement 51 an der Schaltschwinge 44 aus, welches mit der Synchronisations- und Koppelvorrichtung für den vierten Gang in Wirkverbindung steht.

Durch den vorgestellten Aufbau wird erreicht, dass Stellbewegung 38 der Schaltschwinge 44 in etwa in die gleiche Richtung 38 weist wie die Stellbewegung 30 der Schaltwelle 2 beziehungsweise des Schaltfingers 6. Der gleiche Aufbau und die gleiche Wirkungsweise ist auch zur Schaltbetätigung der Gänge G3 und G5 vorgesehen.

Die vorgestellte Schaltvorrichtung 1 ermöglicht es, mit einer externen Getriebeschaltvorrichtung 16 mit H-Schaltkulisse durch einen vergleichsweise einfachen Aufbau eine Gangwahl und Gangschaltbetätigung bei an sich allen denkbaren Gangradanordnungen in einem Schaltgetriebe durchzuführen, wozu nur einer Schaltwelle notwendig ist.

### Bezugszeichen

- 1: Schaltvorrichtung
- 2: Schaltwelle
- 3: Schaltfinger
- 3': Schaltfingerposition
- 4: Schaltfinger
- 5: Schaltfinger
- 6: Schaltfinger
- 7: Schaltfinger
- 8: Schaltfinger
- 9: Schaltfinger
- 10: Verbindungsabschnitt Schaltschwinge 13
- 11: kurzer Schenkel
- 12: langer Schenkel
- 13: Schaltschwinge für den ersten Gang
- 14: Schwenklager der Schaltschwinge
- 15: Eingriffselement in eine Schiebemuffe
- 16: H-Schaltschema, Schaltbetätigungsvorrichtung
- 17: Neutralposition Schaltfinger erster Gang G1
- 18: Neutralposition Schaltfinger zweiter Gang G2
- 19: Neutralposition Schaltfinger dritter Gang G3
- 20: Neutralposition Schaltfinger vierter Gang G4
- 21: Neutralposition Schaltfinger fünfter Gang G5
- 22: Neutralposition Schaltfinger sechster Gang G6
- 23: Neutralposition Schaltfinger Rückwärtsgang RG
- 24: Getriebeschalthebel
- 25: Einlegebewegung des Schalthebels 24
- 26: Einlegebewegung des Schaltfingers 3
- 27: Einlegebewegung des Mitnehmers 50
- 28: Einlegebewegung der Schaltschwinge 13
- 29: Einlegebewegung des Schalthebels 24
- 30: Einlegebewegung des Schaltfingers 6
- 31: Umlenkhebel für den vierten Gang
- 32: Schwenklager des Umlenkhebels
- 33: Mitnehmer des Umlenkhebels
- 34: Eingriffselement des Umlenkhebels
- 35: Schwenklager der Schaltschwinge 44
- 36: Mitnehmer der Schaltschwinge 44 für den vierten Gang
- 37: Einlegebewegung des Mitnehmers 36 für den vierten Gang
- 38: Einlegebewegung der Schaltschwinge 44 für den vierten Gang
- 39: Schaltschwinge für den Rückwärtsgang
- 40: Schaltschwinge für den zweiten Gang
- 41: Schaltschwinge für den sechsten Gang
- 42: Schaltschwinge für den dritten Gang
- 43: Schaltschwinge für den fünften Gang
- 44: Schaltschwinge für den vierten Gang
- 45: Umlenkhebel für den fünften Gang
- 46: Umlenkhebel für den dritten Gang
- 47: Mitnehmer der Schaltschwinge für den zweiten Gang
- 48: kurzer Schenkel
- 49: langer Schenkel
- 50: Mitnehmer an der Schaltschwinge 13 im Neutralzustand
- 50': Mitnehmer an der Schaltschwinge 13 in Schaltzustand
- 51: Eingriffselement an der Schaltschwinge 44
- G1: erster Gang
- G2: zweiter Gang
- G3: dritter Gang
- G4: vierter Gang
- G5: fünfter Gang
- G6: sechster Gang
- G7: siebter Gang
- RG: Rückwärtsgang
- N: Neutralposition

## Patentansprüche

1. Schaltvorrichtung für ein mehrgängiges Schaltgetriebe, mit einer axial verschiebbar und drehbar gelagerten Schaltwelle, mit einem oder mehreren an der Schaltwelle ausgebildeten Schaltfingern, mit Schaltschwingen, die mit jeweils einer Synchronisations- und Koppelvorrichtung für auf wenigstens einer Radsatzwelle des Getriebes gelagerten Losrädern wirkverbunden sind, und mit an den Schaltschwingen jeweils ausgebildeten Mitnehmern, in die der Schaltfinger zur Durchführung eines Übersetzungsänderungsvorgangs eingreifen und über diese die Schaltschwingen axial verschieben kann, **dadurch gekennzeichnet,**
**dass** jeder Schaltschwinge (13, 39, 40, 41, 42, 43, 44) mindestens ein eigener Schaltfinger (3, 4, 5, 6, 7, 8, 9) zugeordnet ist,
**dass** der Mitnehmer (36, 47, 50) einer jeden Schaltschwinge ein im wesentlichen U-förmiges Querschnittsprofil mit einem kurzen Schenkel (11) und einen langen Schenkel (12) aufweist, wobei die Länge des kurzen Schenkels (11) so gewählt ist, dass einerseits in einer Nichtauslenkposition (N) der zugeordnete Schaltfinger seitlich über den kurzen Schenkel (11) hinweg bis zur Anlage an den langen Schenkel (12) und zur Auslenkung der Schaltschwinge verschoben werden kann, und andererseits zur Rückführung der Schaltschwinge in die Nichtauslenkposition (N) gegen den kurzen Schenkel (11) anlegbar ist.

2. Schaltvorrichtung nach Anspruch 1, **dadurch gekennzeichnet, dass** die Mitnehmer (36, 47, 50) nichtzentrisch mit einem Verbindungsabschnitt (10) der jeweiligen Schaltschwinge (13, 39, 40, 41, 42, 43, 44) verbunden sind.

3. Schaltvorrichtung nach Anspruch 2, **dadurch gekennzeichnet, dass** die Schaltschwingen (13, 39, 40, 41, 42, 43, 44) jeweils in einem Schwenklager (14, 35) schwenkbar gelagert sind und an seinem vom Mitnehmer (36, 47, 50) wegweisenden Ende ein Eingriffselement (15, 51) aufweisen.

4. Schaltvorrichtung nach Anspruch 3, **dadurch gekennzeichnet, dass** das Eingriffselement (15, 51) mit der zugeordneten Synchronisations- und Koppelvorrichtung des Schaltgetriebes wirkverbunden ist.

5. Schaltvorrichtung nach wenigstens einem der vorherigen Ansprüche, **dadurch gekennzeichnet, dass** ein schwenkbar gelagerter Umlenkhebel (31, 45, 46) einen Mitnehmer (33) aufweist, in den ein Schaltfinger der Schaltwelle (2) eingreifen kann, und dass der Umlenkhebel (31, 45, 46) an seinem gegenüberliegenden Ende über ein Eingriffselement (34) verfügt, welches in den Eingriffsbereich eines Mitnehmers (36, 50) einer Schaltschwinge (13, 39, 40, 41, 42, 43, 44) ragt.

6. Schaltvorrichtung nach wenigstens einem der vorherigen Ansprüche, **dadurch gekennzeichnet, dass** die Schaltfinger (3, 4, 5, 6, 7, 8, 9) an axial unterschiedlichen Positionen und mit unterschiedlicher Länge an der Schaltwelle (2) angeordnet sind.

7. Schaltvorrichtung nach wenigstens einem der vorherigen Ansprüche, **dadurch gekennzeichnet, dass** die Mitnehmer (36, 47, 50) der Schaltschwingen (13, 39, 40, 41, 42, 43, 44) unterschiedliche seitliche Abstände zu der Schaltwelle (2) aufweisen.

8. Schaltvorrichtung nach wenigstens einem der vorherigen Ansprüche, **dadurch gekennzeichnet, dass** die Mitnehmer (33, 36, 47, 50) der Schaltschwingen (13, 39, 40, 41, 42, 43, 44) und/oder der Umlenkhebel (31, 45, 46) hinsichtlich ihrer kurzen und langen Schenkel (11, 12) derart in der Schaltvorrichtung (1) positioniert sind, dass beim Einlegen eines Gangs (G1) der zugeordnete Schaltfinger (3) den kurzen Schenkel (11) des Mitnehmers (50) kollisionslos in Richtung zum dem langen Schenkel (12) überstreicht, während der Schaltfinger (4) des in der gleichen Schaltgasse befindlichen anderen Gangs (G2) sich von dem langen Schenkel (49) des diesem Gang (G2) zugeordneten Mitnehmers (47) wegbewegend den kurzen Schenkel (48) kollisionslos überstreicht.

9. Schaltvorrichtung nach wenigstens einem der vorherigen Ansprüche, **dadurch gekennzeichnet, dass** diese an einem Fünfgang- oder Sechsgangschaltgetriebe angeordnet ist, dessen axial Radsatzanordnung, ausgehend von einem Anfahrelement, wie folgt ist: Rückwärtsgang (RG) und zweiter Gang (G2), vierter Gang (G4) und sechster Gang (G6), dritter Gang (G3) und erster Gang (G1), fünfter Gang (G5) und im Falle des Siebenganggetriebes siebter Gang (G7).

10. Schaltvorrichtung nach Anspruch 9, **dadurch gekennzeichnet, dass** das Getriebe ein Vorgelegegetriebe mit einer oder zwei Vorgelegewellen und mit mindestens einer Getriebeeingangswelle ist.

11. Schaltvorrichtung nach Anspruch 9, **dadurch gekennzeichnet, dass** das Getriebe ein Doppelkupplungsgetriebe oder ein manuelles beziehungsweise automatisiert schaltbares Schaltgetriebe mit nur einer Anfahr- und Schaltkupplung ist.

12. Schaltvorrichtung nach wenigstens einem der vorherigen Ansprüche, **dadurch gekennzeichnet, dass** diese von einer äußeren Schaltvorrichtung mit einer H-Schaltkulisse (16) betätigbar ist.

## Claims

1. Shift device for a multi-gear shift gearbox, having a shift shaft which is mounted so as to be axially movable and so as to be rotatable, having one or more shift fingers formed on the shift shaft, having shift rockers which are operatively connected to in each case one synchronization and coupling device for loose wheels mounted on at least one wheel set shaft of the gearbox, and having drivers which are formed in each case on the shift rockers and into which the shift fingers can engage, and via these can move the shift rockers axially, in order to carry out a change in transmission ratio, **characterized**
**in that** each shift rocker (13, 39, 40, 41, 42, 43, 44) is assigned at least one shift finger (3, 4, 5, 6, 7, 8, 9) of its own,
**in that** the driver (36, 47, 50) of each shift rocker has a substantially U-shaped cross-sectional profile with a short leg (11) and a long leg (12), the length of the short leg (11) being selected such that firstly, in a non-deflected position (N), the associated shift finger can be moved laterally over the short leg (11) until it comes into contact with the long leg (12) and deflects the shift rocker, and secondly, to return the shift rocker into the non-deflected position (N), said shift finger can be placed in contact with the short leg (11).

2. Shift device according to Claim 1, **characterized in that** the drivers (36, 47, 50) are connected non-centrally to a connecting section (10) of the respective shift rocker (13, 39, 40, 41, 42, 43, 44).

3. Shift device according to Claim 2, **characterized in that** the shift rockers (13, 39, 40, 41, 42, 43, 44) in each case are pivotably mounted in a pivot bearing (14, 35) and have an engagement element (15, 51) at their end pointing away from the driver (36, 47, 50).

4. Shift device according to Claim 3, **characterized in that** the engagement element (15, 51) is operatively connected to the associated synchronization and coupling device of the shift gearbox.

5. Shift device according to one of the preceding claims, **characterized in that** a pivotably mounted deflecting lever (31, 45, 46) has a driver (33) into which a shift finger of the shift shaft (2) can engage, and **in that** the deflecting lever (31, 45, 46) has at its opposite end an engagement element (34) which projects into the engagement region of a driver (36, 50) of a shift rocker (13, 39, 40, 41, 42, 43, 44).

6. Shift device according to at least one of the preceding claims, **characterized in that** the shift fingers (3, 4, 5, 6, 7, 8, 9) are arranged on the shift shaft (2) at different axial positions and with different lengths.

7. Shift device according to at least one of the preceding claims, **characterized in that** the drivers (36, 47, 50) of the shift rockers (13, 39, 40, 41, 42, 43, 44) have different lateral spacings to the shift shaft (2).

8. Shift device according to at least one of the preceding claims, **characterized in that** the drivers (33, 36, 47, 50) of the shift rockers (13, 39, 40, 41, 42, 43, 44) and/or of the deflecting levers (31, 45, 46) are positioned, with regard to their short and long legs (11, 12), in the shift device (1) in such a way that, during the engagement of a gear (G1), the associated shift finger (3) passes, without colliding, over the short leg (11) of the driver (50) in the direction of the long leg (12), while the shift finger (4) of the other gear (G2) situated in the same shift lane passes, without colliding, over the short leg (48) while moving away from the long leg (49) of the driver (47) assigned to said gear (G2).

9. Shift device according to at least one of the preceding claims, **characterized in that** said shift device is arranged on a five-gear or six-gear shift gearbox whose axial wheel set arrangement, proceeding from a starting element, is as follows: reverse gear (RG) and second gear (G2), fourth gear (G4) and sixth gear (G6), third gear (G3) and first gear (G2), fifth gear (G5) and, in the case of the seven-gear gearbox, seventh gear (G7).

10. Shift device according to Claim 9, **characterized in that** the gearbox is a countershaft-type gearbox having one or two countershafts and having at least one gearbox input shaft.

11. Shift device according to Claim 9, **characterized in that** the gearbox is a double-clutch gearbox or a manual or automatically shiftable shift gearbox having only one starting and shift clutch.

12. Shift device according to at least one of the preceding claims, **characterized in that** said shift device can be actuated from an external shift device with an H-shaped shift gate (16).

## Revendications

1. Dispositif de changement de vitesse pour des boîtes de vitesses à plusieurs rapports, comprenant un arbre de changement de vitesse monté de manière déplaçable axialement et de manière rotative, comprenant un ou plusieurs doigts de changement de vitesse réalisés sur l'arbre de changement de vitesse, des fourchettes de changement de vitesse, qui sont connectées fonctionnellement à un dispositif de synchronisation et d'accouplement respectif pour des pignons fous montés sur au moins un arbre d'essieu monté de la boîte de vitesses, et des dispositifs d'entraînement réalisés à chaque fois sur les fourchettes de changement de vitesse, dans lesquels s'engagent les doigts de changement de vitesse pour effectuer une opération de changement de rapport, et par le biais desquels les fourchettes de changement de vitesse peuvent être déplacées axialement, **caractérisé en ce que**
chaque fourchette de changement de vitesse (13, 39, 40, 41, 42, 43, 44) est associée à au moins un doigt de changement de vitesse propre (3, 4, 5, 6, 7, 8, 9),
**en ce que** le dispositif d'entraînement (36, 47, 50) de chaque fourchette de changement de vitesse présente un profil en section transversale essentiellement en forme de U avec une branche courte (11) et une branche longue (12), la longueur de la branche courte (11) étant choisie de telle sorte que d'une part, dans une position non déviée (N), le doigt de changement de vitesse associé puisse être déplacé latéralement au-delà de la branche courte (11) jusqu'en appui contre la branche longue (12) et jusqu'à la déviation de la fourchette de changement de vitesse, et d'autre part, puisse être appliqué contre la branche courte (11) pour ramener la fourchette de changement de vitesse dans la position non déviée (N).

2. Dispositif de changement de vitesse selon la revendication 1, **caractérisé en ce que** les dispositifs d'entraînement (36, 47, 50) sont connectés non centralement à une portion de connexion (10) des fourchettes de changement de vitesse (13, 39, 40, 41, 42, 43, 44) respectives.

3. Dispositif de changement de vitesse selon la revendication 2, **caractérisé en ce que** les fourchettes de changement de vitesse (13, 39, 40, 41, 42, 43, 44) sont à chaque fois montées de manière pivotante dans un palier pivotant (14, 35) et présentent à leur extrémité opposée au dispositif d'entraînement (36, 47, 50) un élément d'engagement (15, 51).

4. Dispositif de changement de vitesse selon la revendication 3, **caractérisé en ce que** l'élément d'engagement (15, 51) est connecté fonctionnellement au dispositif de synchronisation et d'accouplement associé de la boîte de vitesses.

5. Dispositif de changement de vitesse selon au moins l'une quelconque des revendications précédentes, **caractérisé en ce qu'**un levier de renvoi (31, 45, 46) monté à pivotement présente un dispositif d'entraînement (33) dans lequel un doigt de changement de vitesse de l'arbre de changement de vitesse (2) peut s'engager, et **en ce que** le levier de renvoi (31, 45, 46) dispose à son extrémité opposée d'un élément d'engagement (34) qui pénètre dans la région d'engagement d'un dispositif d'entraînement (36, 50) d'une fourchette de changement de vitesse (13, 39, 40, 41, 42, 43, 44).

6. Dispositif de changement de vitesse selon au moins l'une quelconque des revendications précédentes, **caractérisé en ce que** les doigts de changement de vitesse (3, 4, 5, 6, 7, 8, 9) sont disposés dans des positions différentes axialement et avec une longueur différente sur l'arbre de changement de vitesse (2).

7. Dispositif de changement de vitesse selon au moins l'une quelconque des revendications précédentes, **caractérisé en ce que** les dispositifs d'entraînement (36, 47, 50) des fourchettes de changement de vitesse (13, 39, 40, 41, 42, 43, 44) présentent des distances latérales différentes à l'arbre de changement de vitesse (2).

8. Dispositif de changement de vitesse selon au moins l'une quelconque des revendications précédentes, **caractérisé en ce que** les dispositifs d'entraînement (33, 36, 47, 50) des fourchettes de changement de vitesse (13, 39, 40, 41, 42, 43, 44) et/ou des leviers de renvoi (31, 45, 46) sont positionnés en termes de leurs branches courtes et longues (11, 12) dans le dispositif de changement de vitesse (1) de telle sorte que lors de l'enclenchement d'un rapport (G1), le doigt de changement de vitesse associé (3) parcoure la branche courte (11) du dispositif d'entraînement (50) sans collision dans la direction de la branche longue (12), tandis que le doigt de changement de vitesse (4) de l'autre rapport (G2) se trouvant dans la même voie de changement de vitesse parcourt sans collision la branche courte (11) en s'écartant de la branche longue (49) du dispositif d'entraînement (47) associé à ce rapport (G2).

9. Dispositif de changement de vitesse selon au moins l'une quelconque des revendications précédentes, **caractérisé en ce que** celui-ci est disposé sur une boîte de vitesses à cinq ou à six rapports, dont l'agencement d'essieux montés axial, partant d'un élément de démarrage, est le suivant : rapport de marche arrière (RG) et deuxième rapport (G2), quatrième rapport (G4) et sixième rapport (G6), troisième rapport (G3) et premier rapport (G1), cinquième rapport (G5), et, dans le cas d'une boîte de vitesses à sept rapports, septième rapport (G7).

10. Dispositif de changement de vitesse selon la revendication 9, **caractérisé en ce que** la boîte de vitesses est une boîte de vitesses intermédiaire avec un ou deux arbres secondaires et avec au moins un arbre d'entrée de boîte de vitesses.

11. Dispositif de changement de vitesse selon la revendication 9, **caractérisé en ce que** la boîte de vitesses est une boîte de vitesses à double embrayage ou une boîte de vitesses à changement de vitesse manuel ou automatisé, avec seulement un embrayage de démarrage et un embrayage de changement de vitesse.

12. Dispositif de changement de vitesse selon au moins l'une quelconque des revendications précédentes, **caractérisé en ce que** celui-ci peut être actionné par un dispositif de changement de vitesse extérieur avec une coulisse de changement de vitesse en H (16).
